# EUROPEAN PATENT APPLICATION

(11) **EP 2 154 256 A2**
(43) Date of publication of application: **17.02.2010**
(21) Application number: 08767025.3
(22) Date of filing: 24.04.2008
(51) Int. Cl.: C21C 5/35, C21C 5/48, C21C 5/52, C21C 7/072

(54) **TUYER DEVICE FOR INTRODUCING GAS MEDIA UNDER A LIQUID METAL LEVEL**

(30) Priority: 26.04.2007 RU 2007115836
(71) Applicant: TECHCOM GmbH, 80809 München (DE)
(72) Inventor: SCHUMACHER, Edgar, 004 Munchen 80997 (DE); HLOPONIN, Viktor Nikolaevich, Moscow, 119334 (RU); FRANZKY, Renata, Munchen 004 80997 (DE); SCHUMACHER, Ewald Antonovich, Munchen 004 80809 (DE); YUDIN, Andrei Vasilyevich, Rybnitsa, 5500 (MD); VARDANYAN, Levon Agasievich, Kiev, 03028 (UA); PISHIKIN, Vadim Serafimovich, Gomelskaya obl., 247210 (BY)
(74) Representative: Bucks, Teresa Anne
(86) International application number: PCT/RU2008/000264
(87) International publication number: WO 2008/153440

(57) **Abstract**

The invention relates to producing and processing liquid metal in metallurgy. The inventive tuyer device comprises a well block with a built-in shell, coaxial metal pipes arranged inside the shell, a central working channel and an annular channel encompassing the working channel on the side of a device introducible into the liquid metal, wherein the channels are separately connected to ducts for supplying gas media to the metal and the coaxial metal pipes consist of two interconnected sections of different diameters, the second section having the larger diameter, being connected to the ducts for separately supplying gas media to the working channels of the first section, being provided with an extra pipe and having the annular channels only, the gaps of which are in the form of capillaries for the liquid metal, the internal section of the central pipe being closed on both ends and filled with a refractory material.

## Description

The invention relates to producing and processing liquid metal (steel in ferrous metallurgy) in metallurgy.

In recent years in metallurgy, in particular, in ferrous metallurgy, when liquid metal is produced, the process of liquid metal production is intensified introducing different media under a metal level. Gases are more often used as media.

Argon, nitrogen and oxygen combined with CH₄ and nitrogen additives are used as gases. This operation allows accelerating homogenization of liquid metal and processes used during metal refining.

For example, in steel production blowing is widely used in steel-making units, in steel refining units.

A blower is used to supply gas into the steel-making unit including a tuyer device as the base that in any way comprises metal pipes that gas supply (working) channels are arranged into. A tuyer device with a blowing element for side supplying oxygen in molten metal is widely used. In addition, a central working channel for oxygen supply (including with nitrogen added) encompasses an annular working channel for supplying, for example, CH₄ with nitrogen added.

A key problem for implementation of side supplying oxygen under a liquid metal level is the requirement to provide for continuous gas supply to liquid steel. Any interruption in gas supply results in liquid steel to be supplied into working channels with the possibility for steel breakthrough beyond the steel containing unit.

The fact specified above requires a guaranteed exclusion of steel breakthrough beyond the steel containing unit.

A blowing element of a steel-making unit is known, wherein the specified problem is solved. The blowing element comprises a number of straight pipe sections connected between each other, that gas supply channels are arranged into, while the sections of connected pipes comprise a section with capillary and gas supply channels (refer to, for example, KNABL "Annual Refractory Symposium" dated July 1 - 5, 2002).

A material disadvantage of the known blowing element is its inapplicability for oxygen supply under a metal level.

A tuyer device for side supplying oxygen under a liquid metal level is known. The device comprises a well block from a refractory material with a built-in shell coaxial metal pipes arranged inside the shell having on the side of a device introducible into the liquid metal, at least one central working channel and at least one annular working channel; the channels are separately connected to ducts for supplying gas media to liquid metal (refer to, for example, European Patent No. EP 0 565 690 B1).

The known tuyer device is the closest to the claimed one according to its essential features; therefore it is taken as a prototype.

A material disadvantage of the known tuyer device is that it does not comprise, in fact, protection from breakthrough of liquid metal through working channels.

The claimed tuyer device is free from the specified disadvantage. The problem of protection from breakthrough of liquid metal is solved through working channels therein.

The marked technical result is achieved due to the fact, that in the tuyer device for introducing gas media under a liquid metal level, comprising a well block from a refractory material with a built-in shell, coaxial metal pipes arranged inside the shell, having on the side of a device introducible into the liquid metal, at least one central working channel and at least one annular working channel, the working channels are separately connected to ducts for supplying gas media to the metal, according to the claim coaxial metal pipes along their length consist of two interconnected sections of different diameters, the first section has the smaller diameter and designed for the specified supplying gas media into liquid metal, the second section having the larger diameter, being connected to the ducts for separately supplying gas media to the working channels of the first section, being provided with an extra pipe and having the annular channels only and the internal pipe of the section being closed on both ends and filled with a refractory material, the gaps of annular working channels of this tuyer section are in the form of capillaries for the liquid metal. Moreover, annular working channels of the second section of the shell in transition areas to working channels of the first section of the shell are outlined with straight taper surfaces with smooth transition at end points, wherein at least in the transition area the end part of the internal pipe passes into the taper rod located coaxially in the central working channel of the first section. In addition, annular channels of the second section of the coaxial metal pipes in transition areas into working channels of the first section have spherical surface with smooth transition at transition end points, wherein at least in the transition area the end part of the internal pipe passes into a taper rod, located coaxially in the central working channel of the first section. In addition, the annular working channels in the second section of the shell are calibrated being located between pipes of a calibration spring, which initial diameter is lower that outside diameter of the pipe that this spring is placed on. Moreover, the internal pipe of the second section of the coaxial metal pipes has calibration ribs along the outside diameter, including the transition area of the second section of the coaxial pipes into the first section. In addition, the pipes in the second section of the shell have a circumferential weld.

The tuyer device for introducing gas media under a liquid metal level is explained with scheme drawings.

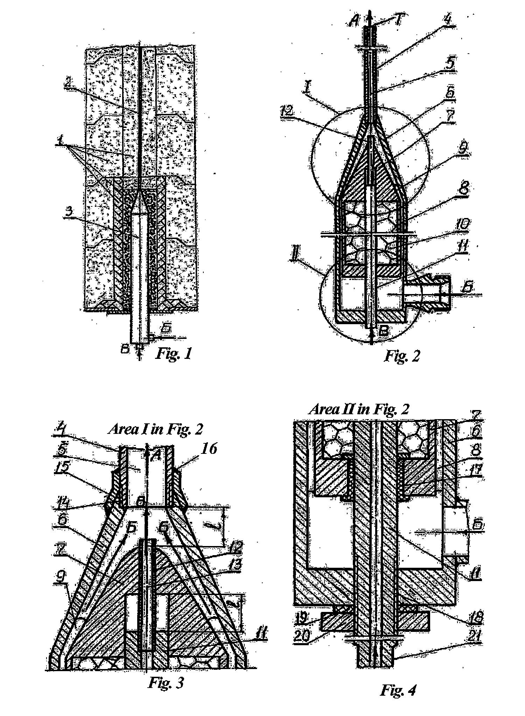

In Fig. 1 longitudinal section of the tuyer device is shown, in Fig. 2 - longitudinal section of a tuyer device embodiment; in Fig. 3 - transverse section A - A in Fig. 1, in Fig. 4 - transverse section B - B in Fig. 2.

The tuyer device comprises coaxial metal pipes 1 and 2 on the side designed introducible into liquid metal. Outside diameter of pipes 2 is designated d in Fig. 1 and 2. It is the first section of the coaxial metal pipes. In the second section these metal pipes have the larger in comparison with d diameter equal to D for external pipe 2, and central pipe 3 is located between pipes 1 and 2 closed on both ends. On the side introducible into liquid metal pipes 1 and 2 form central working channel 4 and annular working channel 5. Pipes are embedded into shell 6 that in its turn is arranged in well block 7. Central pipe 3 is filled with refractory material 8. The end part (end) of central pipes 3 at least on the side of the central working channel 4 passes into taper rod 9 that passes into channel 4 being arranged coaxial with the channel (Fig. 1 and 2). Central pipe 3 can have ends in the form of taper rod 9 on the both sides (Fig. 2). In the second section coaxial metal pipes with the larger diameter D between pipes there are annular working channels 10 and 11 interconnected respectively 10 with 5 and 11 with 4 working channels. Annular working channels 10 and 11 are separately connected to ducts for supplying the respective gas into channel 10 along pipe 12 and into channel 11 along pipe 13 (ducts are shown in Fig. 1 and 2 by arrows). Working channels 4, 5, 10 and 11 are calibrated and for annular channels 5, 10 and 11 either different design ribs 14 or calibration spring 15 are used, wherein ribs 14 and spring 15 encompass also transition areas 16 (Fig. 1) and 17 (Fig. 2) of the second section of the coaxial metal pipes to their first section. In regard to spring 15 this position is provided by springs with internal diameter is a bit lower than the outside diameter of the relative pipe. The following combination is also used: calibration ribs 14 in annular gap 10 and calibration springs 15 in annular gap 11 and vice-versa. Transition between these two sections of the coaxial metal pipes can be made along taper surface 16 (Fig. 1) or spherical surface 17 (Fig. 2). By any design this transition is made smooth at transition end points. Cross-section of annular channels 10 and 11 is equal or a bit more than cross-section of channels which they are separately connected with, i.e. channel 10 with channel 5 and channel 11 with channel 4. But in any case the size of annular gaps of channels 10 and 11 is capillary for liquid metal under which level gas media is considered to be supplied, wherein the capillary is meant to be a narrow gap that prevent liquid metal from passing through it. In regard to liquid steel in metal melting and refining units capillaries are to be gaps of 1.5...2 mm and less.

According to assembly conditions the metal pipes in the second section of the unit have circumferential welds 18.

The tuyer device for introducing gas media under a liquid metal level operates as follows.

Well block 7 with shell 6 and steel pipes 1, 2 and 3 as shown in Fig. 1 or 2 are to be mounted in unit lining that is used for production and processing liquid metal. To intensify production process (metal melting or refining) oxygen is supplied to liquid metal in gaseous condition, wherein is supplied under a metal level (for example, in steel melting unit: electric arc or open-hearth furnace). Gaseous oxygen is supplied by pipe 13. In some cases a certain quantity of nitrogen is added to oxygen. Oxygen by annular working channel 11 is supplied to central channel 4 and then to liquid metal. Due to calibration ribs 14 available oxygen is uniformly supplied into channel 4. If calibration spring 15 is used, oxygen flow is twisted and being twisted is supplied to liquid metal that results in improving of interaction effect between metal and oxygen.

Gas CH₄, including with nitrogen added, is supplied by pipe 12, then by the annular working channel 10 to annular channel 5 and to liquid metal, encompassing liquid oxygen flow supplied to metal by central channel 4. Therefore accelerated burning of the shell 6, well block 7 and furnace lining is prevented.

Available smooth transitions 16 (or 17), as well as taper rod 9 included into central working channel 4, prevent from effect of supplied gas jet separation.

Selecting cross-section ratios of calibration channel 11 and central channel 4 provides for acceleration of oxygen flow to metal. Differential pressure provides for pipe 3 to be pressed to pipe 1 through ribs 14 or spring 15. Similarly pipe 1 is pressed to pipe 2. In both cases the specified pressing is provided in areas 16(17).

In case of oxygen supply is disturbed (or in case of any other causes) liquid metal (steel) starts to be supplied to central channel 4. Calibration design of annular working channels 10 and 11 with capillary gaps for liquid metal (1.5...2.0 mm for liquid steel) stops further passing of liquid metal. Moreover, effect of metal breakthrough prevention is intensified by the refractory material 8 being melted.

Therefore, in the claimed tuyer device for introducing gas media under a liquid metal level metal breakthrough is prevented over the operation area of the tuyer device.

## Claims

1. A tuyer device for introducing gas media under a liquid metal level comprising a well block from a refractory material with a built-in shell, coaxial metal pipes arranged inside the shell, having on the side of a device introducible into the liquid metal, at least one central working channel and at least one annular working channel, the working channels are separately connected to ducts for supplying gas media to the metal, wherein the coaxial metal pipes along their length consist of two interconnected sections of different diameters, the first section having the smaller diameter and designed for the specified supplying gas media to liquid metal, the second section having the larger diameter, being connected to the ducts for separately supplying gas media to the working channels of the first section, being provided with an extra pipe and having the annular channels only and the internal pipe of the section being closed on both ends and filled with a refractory material, the gaps of annular working channels of this tuyer section are in the form of capillaries for the liquid metal.

2. The tuyer device according to claim 1, wherein the annular working channels of the second section of the coaxial metal pipes in transition areas into working channels of the first section are outlined with straight taper surfaces with smooth transition at end points, while at least in the transition area the end part of the internal pipe passes into a taper rod located coaxially in the central working channel of the first section.

3. The tuyer device according to claim 1, wherein the annular channels of the second section of the coaxial metal pipes in transition areas into the working channels of the first section have spherical surface with smooth transition at end points, while at least in the transition area the end part of the internal pipe passes into the taper rod, located coaxially in the central working channel of the first section.

4. The tuyer device according to claim 1, wherein the annular working channels in the second section of the shell are calibrated being located between pipes of the calibration spring with initial diameter lower than the outside diameter of the pipe, that this spring is placed on.

5. The tuyer device according to claim 1, wherein the internal pipe of the second section of the coaxial metal pipes is made with calibration ribs on the outside diameter, including over the transition area of the second section of the coaxial pipes into the first section.

6. The tuyer device according to claim 1, wherein the pipes in the second section of the shell have circumferential weld.
